# EUROPÄISCHE PATENTANMELDUNG

(11) **EP 1 270 529 A1**
(43) Veröffentlichungstag der Anmeldung: **02.01.2003**
(21) Anmeldenummer: 01114736.0
(22) Anmeldetag: 22.06.2001
(51) Int. Cl.: C04B 24/12

(54) **Verfahren zur Beschleunigung des Abbindens und Erhärtens von hydraulischen Bindemitteln und hierfür zu verwendende Gemische**

(71) Anmelder: Sika AG, vorm. Kaspar Winkler & Co., CH-8048 Zürich (CH)
(72) Erfinder: Bürge, Christian M., 5503 Schafisheim (CH); Bach, Harald, 8451 Kleinandelfingen (CH)
(74) Vertreter: Blum, Rudolf Emil Ernst

(57) **Zusammenfassung**

Beschrieben werden ein Abbinde- und Erhärtungsbeschleuniger und ein Verfahren zur Beschleunigung des Abbindens und Erhärtens von hydraulischen Bindemitteln unter Zugabe eines solchen Beschleunigers. Die für die Beschleunigung wesentlichen Bestandteile dieses Beschleunigers sind Nitrat, Alkanolamin, Hydroxycarbonsäure und Polyol.

Die Erhärtungsbeschleunigung ist nicht mit einem raschen Verlust an Verarbeitbarkeit verbunden, welche sonst bei beschleunigten Systemen üblich ist.

## Beschreibung

Gegenstand der vorliegenden Erfindung ist ein Zusatzmittel und ein Verfahren zur Beschleunigung des Abbindens und des Erhärtens von hydraulischen Bindemitteln, insbesondere für die Herstellung vorfabrizierter Elemente und das Beschleunigen der Festigkeitsentwicklung von auf der Baustelle hergestelltem Beton, speziell bevorzugt von selbstverdichtendem Beton (Self Compacting Concrete, SCC).

Es sind bereits viele Substanzen bekannt, welche das Abbinden und Erhärten von Beton beschleunigen. Die gebräuchlichsten sind u.a. Nitrate, Formiate, Thiocyanate, Nitrite, Mono-, Di- und Triethanolamin, stark alkalisch reagierende Stoffe wie Alkalihydroxide, Alkalikarbonate, Alkalisilikate, Alkalialuminate sowie Erdalkalichloride.

Bei den stark alkalisch reagierenden Stoffen treten unerwünschte Belästigungen des Verarbeiters auf.

Betontechnologisch gesehen reduzieren stark alkalische Abbindebeschleuniger die Endfestigkeiten, vergrössern das Schwinden, was zu Rissbildung führen kann wodurch die Dauerhaftigkeit eines Bauwerkes beeinträchtigt wird.

Chloridhaltige Abbindebeschleuniger sind in der Regel auf einer Baustelle unerwünscht, weil sie sowohl an den Armierungseisen im Beton wie auch an Baustellengeräten zur Korrosion führen können.

Im weiteren ist bekannt, dass chloridhaltige Abbindebeschleuniger die Chemikalienbeständigkeit, vor allem die Sulfatbeständigkeit des Zementes sowie die Langzeitfestigkeiten, stark reduzieren.

Nitrate sind seit langem als "Frostschutzmittel" bekannt, d.h. sie bewirken eine Abbindebeschleunigung bei tiefen Temperaturen. Bei Raumtemperaturen ist die Wirkung der Nitrate dagegen unbedeutend (siehe z.B. US 4 337 094 (Tokan))

Calciumformiat wird schon in DE 2 611 419 als Erhärtungsbeschleuniger für Portlandzement beschrieben, doch liegt seine Wirkung deutlich unter derer des CaCl₂. Daneben weist es eine zu geringe Löslichkeit in Wasser auf.

Ein sehr guter Abbindebeschleuniger ist Ca[NO₂]₂ (siehe SU 563 392), doch ist sein Einsatz wegen seiner hohen Giftigkeit in Europa in den notwendigen Konzentrationen nicht denkbar.

Die Kombination eines Thiocyanats mit einem Alkanolamin erhöht gemäss US 4 373 956 (Rosskopf) sowohl die Erhärtungsgeschwindigkeit als auch die Druckfestigkeit von zementösen Produkten.

Organische Abbindebeschleuniger sind verschiedene beschrieben, doch auf dem Markt sind nur wenige von Bedeutung. So wirken Mono-, Di- und Triethanolamin in Kombination mit Nitraten bei tiefen Temperaturen beschleunigend auf das Abbinden von Zement.

Eine Kombination von Triethanolamin mit Aluminiumsulfat erhöht gemäss US 3 782 991 (Bürge) die Frühfestigkeit von Baumaterialien.

Die Eignung von α-Hydroxycarboxylverbindungen als Abbindebeschleuniger für Portlandzement ist in US 4 264 367 (Schutz) offenbart.

US 4 473 405 (Gerber) beschreibt einen Beschleuniger aus einem Nitrat, einem Alkanolamin und einem Thiocyanat, und Kombinationen von Alkanolamin, Nitrat, Thiocyanat und Carbonsäuren werden in EP 0 670 292 offenbart.

Die korrosionsinhibierende Wirkung von Alkanolaminen auf Stahl ist z.B. aus US 4 726 914 bekannt.

Die gebräuchlichen und/oder die oben beschriebenen Beschleuniger weisen alle einen oder mehrere Nachteile auf. Sie wirken nur bei tiefen Temperaturen, nicht aber bei Raumtemperatur, sie erhöhen die Frühfestigkeit, reduzieren jedoch die Endfestigkeiten gegenüber einer entsprechenden Probe ohne Zusatz, sie verkürzen die Verarbeitungszeit oder sie sind toxisch oder korrosiv.

In EP 0 554 046 A1 wird die Verwendung von niedermolekularen Glykolen zusammen mit Kalziumnitrat und Kalziumnitrit als Abbindebeschleuniger beschrieben. Ein Hinweis auf eine Wirkung als Erhärtungsbeschleuniger, d.h. beschleunigte Festigkeitsentwicklung, ist EP 0 554 046 A1 nicht zu entnehmen.

Ziel der vorliegenden Erfindung war es deshalb, einen Abbinde- und Erhärtungsbeschleuniger bereitzustellen, der, vor allem in Kombination mit Superverflüssigern, hohe Anfangs- und Endfestigkeiten von hydraulischen Bindemitteln oder von hydrauliche Bindemittel enthaltenden Mischungen, insbesondere von Beton- und Mörtel, ergibt ohne die Verarbeitungsdauer zu verkürzen.

Überraschenderweise wurde nun gefunden, dass sich mit einer Kombination aus 4 Komponenten, nämlich
(1) mindestens einem anorganischen Nitrat, insbesondere mindestens einem Alkali- und/oder Erdalkali- und/oder Aluminiumnitrat,
(2) mindestens einem Alkanolamin,
(3) mindestens einer Carbonsäure, insbesondere mindestens einer C1-C6 Hydroxycarbonsäure, und
(4) mindestens einem Polyol, insbesondere mindestens einem C2-C6 Polyol,

Beschleuniger herstellen lassen, welche die obengenannten Anforderungen erfüllen.

Weitere technische Vorteile der erfindungsgemässen Beschleuniger sind ihre Chlorid- und Nitritfreiheit, sowie die Tatsache, dass die Mischungen, nicht zuletzt dank der Zugabe eines Alkanolamins, auf Betonstahl nicht korrosiv wirken.

Der erfindungsgemässe Beschleuniger, auch als zusatzmittel bezeichnet, ist speziell geeignet zur Beschleunigung des Abbindens und des Erhärtens von hydraulischen Bindemitteln, insbesondere für die Herstellung vorfabrizierter Elemente und das Beschleunigen der Festigkeitsentwicklung von auf der Baustelle hergestelltem Beton, speziell bevorzugt von selbstverdichtendem Beton (Self Compacting Concrete, SCC). Im ersten Falle kann die übliche Erhärtungsbeschleunigung durch Wärme (Elektro- oder Ölheizung oder Dampf) verkürzt oder gar eliminiert werden. Im zweiten Falle können die Ausschalfristen für den Beton verkürzt werden oder es kann auch bei tiefer Temperatur weiter betoniert werden. Anwendungen ergeben sich auch bei der Herstellung rasch abbindender Zement- und Mörtelmischungen speziell zum Fixieren von Fertigteilen oder zum Giessen von Formteilen.

Die erfindungsgemässen Abbinde- und Erhärtungsbeschleuniger für hydraulische Bindemittel bestehen aus oder enthalten eine beschleunigende Zusammensetzung, die aus den folgenden Komponenten und/oder Säure/Base-Reaktionsprodukten dieser Komponenen besteht:
(1) mindestens einem anorganischen Nitrat,
(2) mindestens einem Alkanolamin,
(3) mindestens einer Carbonsäure und
(4)mindestens einem Polyol.

Bevorzugt eingesetzte Nitrate sind Alkali-, Erdalkali- oder Aluminiumnitrate oder Mischungen derselben.

Eine bevorzugt eingesetzte Alkanolaminkomponente besteht aus Propanol- und/oder Ethanolaminen, insbesondere Mono-, Di- oder Trialkanolaminen sowie Alkylalkanolaminen, vorzugsweise Alkylalkanolamine mit C1-C3-Alkylen. Beispiele bevorzugter Alkanolamine sind Monoethanolamin, Diethanolamin, Triethanolamin, N-Methyldiethanolamin, Triisopropanolamin und Mischungen derselben.

Eine bevorzugt eingesetzte Carbonsäurekomponente besteht aus Carbonsäuren, die ausgewählt sind aus der Gruppe der unsubstituierten Carbonsäuren, insbesondere C1-C6 Carbonsäuren, α-Hydroxycarbonsäuren, Polyhydroxycarbonsäuren, α-Aminocarbonsäuren und Mischungen derselben. Speziell bevorzugt sind α-Hydroxycarbonsäuren, Polyhydroxycarbonsäuren und α-Aminocarbonsäuren mit 1 bis 6 C-Atomen, sowie gegebenfalls arylsubstituierte C1- C6 α-Hydroxymonocarbonsäuren. Beispiele geeigneter und bevorzugter Säuren sind α-Hydroxymonocarbonsäuren, wie Milchsäure und Mandelsäure.

In einer weiteren bevorzugten Ausführungsform wird das Alkanolamin als Salz einer organischen Carbonsäure eingesetzt, wobei die Carbonsäure vorzugsweise eine der obengenannten Carbonsäuren ist.

Für die Herstellung des Beschleunigers können ein Alkanolamin als Salz einer Säure oder ein Alkanolamin als Salz verschiedener Säuren, oder verschiedene Alkanolamine als Salz derselben Säure oder verschiedene Alkanolamine als Salze verschiedener Säuren eingesetzt werden.

Vorzugsweise ist das mindestens eine Polyol ein C2-C6 Polyol. Ein speziell bevorzugtes Polyol ist 1,2,3-Propantriol.

Üblicherweise enthält der Beschleuniger die Nitratkomponente in Mengen von 10-58 Gew.-%, die Alkanolaminkomponente in Mengen von 1-20 Gew.-%, die Carbonsäurekomponente in Mengen von 1-15 Gew.-% und die Polyolkomponente in Mengen von 2-20 Gew.-%. Vorzugsweise enthält der Beschleuniger die Nitratkomponente in Mengen von 15-50 Gew.-%, die Alkanolaminkomponente in Mengen von 5-20 Gew.-%, die Carbonsäurekomponente in Mengen von 2-12 Gew.-% und die Polyolkomponente in Mengen von 2-15 Gew.-%.

Der Beschleuniger wird dem hydraulischen Bindemittel, insbesondere dem Zement, üblicherweise in einer Menge von 0.2-5.0 Gew.-% bezogen auf das Gewicht des hydraulischen Bindemittels zugesetzt, vorzugsweise in einer Menge von 0.2-3.5 Gew.-% .

Ein weiterer Gegenstand der vorliegenden Erfindung ist ein Verfahren zur Beschleunigung des Abbindens und Erhärtens eines hydraulischen Bindemittels, wie Zement, in reiner Form oder als Abmischung mit latent hydraulischen Bindemitteln wie Flugasche, Hochofenschlacke, Puzzolane, Oelschieferabbrand oder Silica fume, sowie von daraus hergestelltem Mörtel und Beton, durch Zugabe von 0.2 bis 5.0 Gew.% des erfindungsgemässen Beschleunigers bezogen auf das Gewicht des Bindemittels.

Die erfindungsgemässen Beschleuniger können als Pulver, dispergiert oder gelöst in Wasser und/oder in Kombination mit einem oder mehreren anderen Betonzusatzmitteln wie wasserreduzierenden Zusatzmitteln, Superverflüssigern, Verflüssigern, Silica Slurries, und/oder Dispergiermitteln zur Anwendung gelangen.

Die Zugabe erfolgt üblicherweise in fester oder flüssiger Form direkt ins Anmachwasser, zum Zement, zum Trockengemisch oder zur fertigen Beton- oder Mörtelmischung.

Ein pulverförmiger Abbinde- und Erhärtungsbeschleuniger kann aber auch vorgemischt in hydraulischen Bindemitteln oder in trockenem Mörtel und Beton zur Anwendung gelangen, und er kann dem Bindemittel beispielsweise bei dessen Herstellung im Werk zugemischt werden.

In bevorzugten Ausführungsformen wird der Beschleuniger dem trockenen oder mit Wasser angemachten Bindemittel, Mörtel oder Beton im Werk, auf der Baustelle, im Mischer, in der Förderpumpe oder über einen statischen Mischer mit einem Pulverdosiergerät oder einem Flüssigdosiergerät direkt in die Mischung zugegeben.

Die folgenden Beispiele sollen die Erfindung näher erläutern ohne diese aber in irgendeiner Weise zu beschränken.

### Beispiele 1 bis 4

Anhand von Mörtelversuchen wird der Einfluss von Einzelkomponenten und Teilmischungen der erfindungsgemässen Beschleuniger aufgezeigt.

Die Prüfmischung für die Beispiele 1 bis 4 setzt sich wie folgt zusammen:

| | |
|---|---|
| Portlandzement CEM I | 1.000 kg |
| Sand 0-5 mm | 3.000 kg |
| Wasser | 0.395 kg |
| Polycarboxylat Superverflüssiger | 0.010 kg |
| Komponente(n) des Beschleunigers | 0.015 kg |

### Beispiel 1

Effekt eines Alkanolamins alleine und in Kombination mit einer Hydroxycarbonsäure auf die 28 Tage Druckfestigkeit

| Zusatzmittel | Druckfestigkeit 28 Tage |
|---|---|
| Nullversuch (ohne Beschleuniger) | 45 MPa |
| Alkanolamin | 52 MPa |
| Alkanolamin + Hxydroxycarbonsäure | 59 MPa |

### Beispiel 2

Beispiel zur Erläuterung des Einflusses zweier in einem erfindungsgemässen Beschleuniger verwendbarer Alkanolamine.

| Zusatzmittel | Druckfestigkeit 1 Tag |
|---|---|
| Nullversuch (ohne Beschleuniger) | 24 MPa |
| Diethanolamin + Milchsäure | 26 MPa |
| N-Methyldiethanolamin + Milchsäure | 32 MPa |

### Beispiel 3

Beispiel zur Darstellung des Effektes eines in einem erfindungsgemässen Beschleuniger verwendbaren Nitrates. Versuchstemperatur 10°C.

| Zusatzmittel | Druckfestigkeit | |
|---|---|---|
| | 1 Tag | 2 Tage |
| Nullversuch (ohne Beschleuniger) | 6.4 MPa | 21 MPa |
| Calciumnitrat | 9.0 MPa | 24 MPa |
| Aluminiumnitrat | 18.0 MPa | 30 MPa |

### Beispiel 4

Beispiel zur Erläuterung der Wirkung von Polyol.

| Zusatzmittel | Druckfestigkeit 18 h |
|---|---|
| Nullversuch (ohne Beschleuniger) | 4.8 MPa |
| Alkanolamin + Milchsäure | 19.8 MPa |
| Alkanolamin + Milchsäure + Propantriol | 24.2MPa |

### Beispiele 5 bis 7

In den folgenden Beispielen 5 bis 7 wird der Effekt der einzelnen Komponenten zusammen mit einem Polycarboxylat Superverflüssiger sowie zweier erfindungsgemässer Beschleuniger auf die Verarbeitungswilligkeit (Ausbreitmass 0-60 Minuten nach Mischen), die Abbindezeiten sowie auf die 20 Stunden Druckfestigkeit dargestellt.

| **Betonprüfmischung:** | |
|---|---|
| Portlandzement CEM I | 7.500 kg |
| Steinmehl | 1.500 kg |
| Sand 0-1.2 mm | 9.500 kg |
| Sand 1.2-4 mm | 8.000 kg |
| Sand 4-8 mm | 4.500 kg |
| Kies 8-16 mm | 9.500 kg |
| Kies 16-32 mm | 17.000 kg |

Aus diesen Betonmischungen wurden Prüfwürfel 12x12x12 cm hergestellt und daran die Druckfestigkeiten bestimmt.

Für die Testmischungen wurden die folgenden erfindungsgemässen Beschleuniger verwendet:

| Beschleuniger | 1 | 2 |
|---|---|---|
| Alkanolaminlactat | 12 % | 9 % |
| Anorganisches Nitrat | 40 % | 47 % |
| Propantriol | 10 % | 5 % |
| Wasser | 38 % | 39 % |

**Beispiel 5**

Betonversuche bei 15°C; W/Z 0.41 konstant

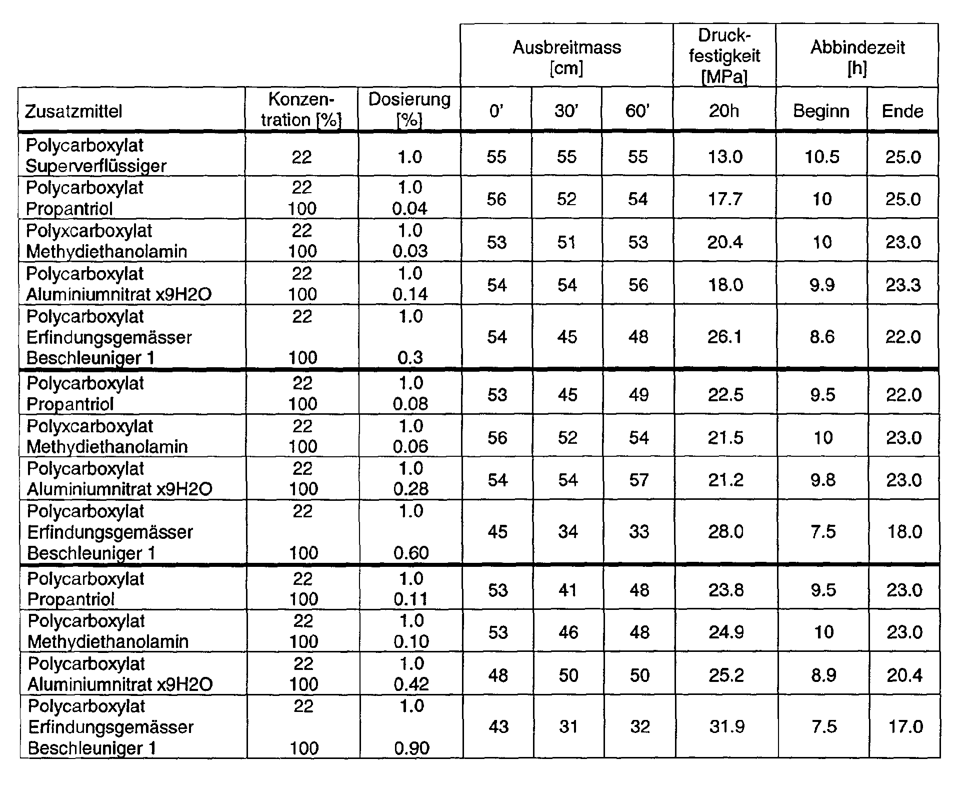

### Beispiel 6

Betonversuche bei 10°C; W/Z 0.44 konstant

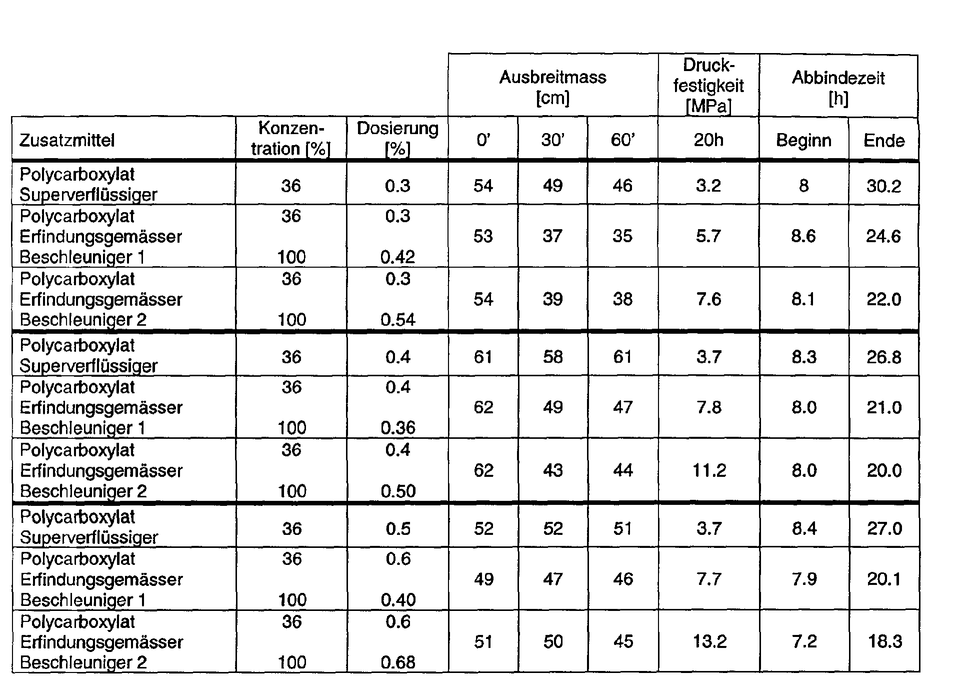

### Beispiel 7

In diesem Beispiel wird der Unterschied eines erfindungsgemässen Beschleunigers gegenüber einem kommerziell erhältlichen, auf Calciumnitrat basierenden Beschleuniger und Calciumchlorid dargestellt. Die Versuche wurden bei 10°C durchgeführt. Der Beton wurde mit 1% Polycarboxylat Superverflüssiger plastifiziert.

| Zusatzmittel | G/G | W/Z | Druckfestigkeit | |
|---|---|---|---|---|
| | | | 1 Tag | 2 Tage |
| Nullversuch (ohne Beschleuniger) | - | 0.460 | 10.5 MPa | 26.7 MPa |
| Kommerziell erhältlicher Beschleuniger basierend auf Calciumnitrat | 1.0 % | 0.470 | 11.3 MPa | 26.0 MPa |
| Calciumchlorid 30%ige wässrige Lösung | 6.0 % | 0.480 | 12.7 MPa | 22.1 MPa |
| Erfindungsgemässer Beschleuniger 1 | 1.5 % | 0.460 | 30.6 MPa | 35.1 MPa |
| Erfindungsgemässer Beschleuniger 2 | 1.5 % | 0.460 | 31.3 MPa | 37.8 MPa |

## Patentansprüche

1. Abbinde- und Erhärtungsbeschleuniger für hydraulische Bindemittel, **dadurch gekennzeichnet, dass** er eine beschleunigende Zusammensetzung umfasst, die aus den folgenden Komponenten und/oder Säure/Base-Reaktionsprodukten dieser Komponenen besteht:
(1) mindestens einem anorganischen Nitrat,
(2) mindestens einem Alkanolamin,
(3) mindestens einer Carbonsäure und
(4)mindestens einem Polyol.

2. Abbinde- und Erhärtungsbeschleuniger gemäss Anspruch 1, **dadurch gekennzeichnet, dass** das mindestens eine Nitrat ausgewählt ist aus der Gruppe bestehend aus Alkalinitrat, Erdalkalinitrat, Aluminiumnitrat und Mischungen derselben.

3. Abbinde- und Erhärtungsbeschleuniger gemäss Anspruch 1 oder 2, **dadurch gekennzeichnet, dass** das mindestens eine Alkanolamin ausgewählt ist aus der Gruppe umfassend Ethanolamine, Propanolamine und Mischungen derselben.

4. Abbinde- und Erhärtungsbeschleuniger gemäss Anspruch 3, **dadurch gekennzeichnet, dass** das Alkanolamin ausgewählt ist aus der Gruppe umfassend Monoethanolamin, Diethanolamin, Triethanolamin, N-Methyldiethanolamin, Triisopropanolamin und Mischungen derselben.

5. Abbinde- und Erhärtungsbeschleuniger gemäss einem der Ansprüche 1 bis 4, **dadurch gekennzeichnet, dass** das Alkanolamin als Salz einer organischen Carbonsäure vorliegt oder daraus hervorgegangen ist.

6. Abbinde- und Erhärtungsbeschleuniger gemäss einem der Ansprüche 1 bis 5, **dadurch gekennzeichnet, dass** die mindestens eine Carbonsäure ausgewählt ist aus der Gruppe bestehend aus unsubstituierten Carbonsäuren, α-Hydroxycarbonsäuren, Polyhydroxycarbonsäuren, α-Aminocarbonsäuren und Mischungen derselben.

7. Abbinde- und Erhärtungsbeschleuniger gemäss Anspruch 6, **dadurch gekennzeichnet, dass** die mindestens eine Carbonsäure ausgewählt ist aus der Gruppe bestehend aus unsubstituierten C1-C6 Carbonsäuren, gegebenenfalls arylsubstituierten C1-C6 α-Hydroxycarbonsäuren, C1-C6 Polyhydroxycarbonsäuren, C1-C6 α-Aminocarbonsäuren und Mischungen derselben.

8. Abbinde- und Erhärtungsbeschleuniger gemäss einem der Ansprüche 1 bis 7, **dadurch gekennzeichnet, dass** die mindestens eine Carbonsäure eine gegebenenfalls arylsubstituierte α-Hydroxymonocarbonsäure oder eine Mischung solcher α-Hydroxymonocarbonsäuren ist, insbesondere Milchsäure und/oder Mandelsäure.

9. Abbinde- und Erhärtungsbeschleuniger gemäss einem der Ansprüche 1 bis 8, **dadurch gekennzeichnet, dass** das mindestens eine Polyol ein C2-C6 Polyol oder eine Mischung von C2-C6 Polyolen ist.

10. Abbinde- und Erhärtungsbeschleuniger gemäss Anspruch 9, **dadurch gekennzeichnet, dass** das Polyol 1,2,3-Propantriol ist.

11. Abbinde- und Erhärtungsbeschleuniger gemäss einem der Ansprüche 1 bis 10, **dadurch gekennzeichnet, dass** der Beschleuniger das mindestens eine Nitrat in einer Menge von 10-58 Gew.-%, das mindestens eine Alkanolamin in einer Menge von 1-20 Gew.-%, die mindestens eine Carbonsäure in einer Menge von 1-15 Gew.-% und das mindestens eine Polyol in einer Menge von 2-20 Gew.-% enthält.

12. Abbinde- und Erhärtungsbeschleuniger gemäss einem der Ansprüche 1 bis 11, **dadurch gekennzeichnet, dass** der Beschleuniger als Pulver, als Dispersion in Wasser oder als wässrige Lösung vorliegt.

13. Abbinde- und Erhärtungsbeschleuniger gemäss einem der Ansprüche 1 bis 12, **dadurch gekennzeichnet, dass** er zusätzlich ein wasserreduzierendes Zusatzmittel oder einen Superverflüssiger enthält.

14. Verfahren zur Beschleunigung des Abbindens und Erhärtens eines hydraulischen Bindemittels, wie Zement, in reiner Form oder als Abmischung mit latent hydraulischen Bindemitteln wie Flugasche, Hochofenschlacke, Puzzolane, Oelschieferabbrand oder Silica fume, sowie daraus hergestelltem Mörtel und Beton, durch Zugabe eines Beschleunigers, **dadurch gekennzeichnet, dass** man einem Gemisch, welches das genannte Bindemittel enthält 0.2 bis 5.0 Gew.% des Beschleunigers nach einem der Ansprüche 1 bis 13, bezogen auf das Gewicht dieses Bindemittels, zugibt.

15. Verfahren gemäss Anspruch 14, **dadurch gekennzeichnet, dass** der Abbinde- und Erhärtungsbeschleuniger pulverförmig ist und vorgemischt im hydraulischen Bindemittel oder in trockenem Mörtel oder Beton zur Anwendung gelangt.

16. Verfahren gemäss Anspruch 14 oder 15, **dadurch gekennzeichnet, dass** der Abbinde- und Erhärtungsbeschleuniger dem Bindemittel bei dessen Herstellung im Werk zugemischt wird.

17. Verfahren gemäss Anspruch 14 oder 15, **dadurch gekennzeichnet, dass** der Beschleuniger dem trockenen oder mit Wasser angemachten Bindemittel, Mörtel oder Beton im Werk, auf der Baustelle, im Mischer, in der Förderpumpe oder über einen statischen Mischer mit einem Pulverdosiergerät oder einem Flüssigdosiergerät direkt in die Mischung zugegeben wird.

18. Bindemittel enthaltende Mischung, **dadurch gekennzeichnet, dass** sie ein hydraulisches Bindemittel und einen Beschleuniger nach einem der Ansprüche 1 bis 13 enthält oder daraus besteht.
